# EUROPÄISCHE PATENTSCHRIFT

(11) **EP 1 045 782 B1**
(45) Veröffentlichungstag und Bekanntmachung des Hinweises auf die Patenterteilung: **24.05.2006**
(21) Anmeldenummer: 99934456.7
(22) Anmeldetag: 08.05.1999
(51) Int. Cl.: B60T 8/00

(54) **VERFAHREN UND VORRICHTUNG ZUR ANTRIEBSSCHLUPFREGELUNG**
METHOD AND DEVICE FOR ANTI-SLIP CONTROL
PROCEDE ET DISPOSITIF DE REGULATION ANTIPATINAGE

(30) Priorität: 19.08.1998 DE 19837524
(43) Veröffentlichungstag der Anmeldung: 25.10.2000
(73) Patentinhaber: ROBERT BOSCH GMBH, 70442 Stuttgart (DE)
(72) Erfinder: WANDEL, Helmut, D-71706 Markgröningen (DE)
(86) Internationale Anmeldenummer: PCT/DE1999/001396
(87) Internationale Veröffentlichungsnummer: WO 2000/010849

(56) Entgegenhaltungen:
- EP-A- 0 498 355
- DE-A- 19 537 439
- US-A- 5 275 474

## Beschreibung

### Stand der Technik

Die Erfindung betrifft ein Verfahren und eine Vorrichtung zur Antriebsschlupfregelung.

Antriebsschlupfregelungen sind aus dem Stand der Technik in vielfacher Ausprägung bekannt. Der Oberbegriffe der Ansprüchen 1 und 8 sind aus dem Dokument US-A-5,275,474 bekannt geworden. Beispielsweise zeigt die EP-A 0 163 941 (US-Patent 4 625 824) ein Antriebsschlupfregelsystem, bei welchem bei erkannter Durchdrehneigung wenigstens eines Antriebsrades dieses Rad gebremst und/oder die Antriebseinheit des Fahrzeugs zur Reduzierung ihres Drehmoments veranlaßt wird. In wenigstens einem Betriebsbereich wird das zuerst eine Durchdrehneigung zeigende Rad gebremst, während das andere Antriebsrad auch bei vorhandener Durchdrehneigung unbeeinflußt bleibt. In einigen Betriebssituationen, beispielsweise bei einer Fahrbahn mit großen Reibwertunterschieden an den Antriebsrädern, kann es vorkommen, daß während der Antriebsschlupfregelung an dem Antriebsrad, welches auf einem niedrigen Reibwert sich befindet, auch das zweite, auf dem höheren Reibwert laufende, bisher stabile Rad Durchdrehneigung aufweist. Ist dies der Fall, gehen Traktion und Seitenführung des Fahrzeugs verloren und/oder Schwingungsverhalten durch wechselweisen Bremskraftauf- und -abbau tritt auf. Ferner muß auf eine empfindlichere An-triebsschlupfregelung übergegangen werden, bei welcher beide Räder gebremst oder das Motormoment reduziert wird. Eine derartige Betriebssituation ist also insgesamt unbefriedigend.

Es ist Aufgabe der Erfindung, Maßnahmen anzugeben, mit denen das Auftreten einer wie oben geschilderten Betriebssituation vermieden wird kann.

Dies wird durch die kennzeichnenden Merkmale der unabhängigen Ansprüche erreicht.

### Vorteile der Erfindung

Die erfindungsgemäße Lösung vermeidet wirkungsvoll das Auftreten einer Betriebssituation, in der während einer Antriebsschlupfregelung das auf dem höheren Reibwert laufende Rad (High-Rad) in einen instabilen Zustand übergeht.

Besonders vorteilhaft ist, daß bereits vor Auftreten der Instabilität präventiv Bremskraft am anderen, dem geregelten Rad (Low-Rad) abgebaut wird, auf diese Weise das herrschende Sperrmoment reduziert wird und die drohende Instabilität am anderen Rad vermieden wird.

Vorteilhaft ist, daß dann ein Übergang in eine empfindlichere Antriebsschlupfregelung und eine Reduzierung des Motormoments durch den Antriebsschlupfregler vermieden werden kann.

In besonders vorteilhafter Weise werden Traktion und Seitenführung erhalten.

Besonders vorteilhaft ist, daß der Bremskraftabbau nur dann stattfindet, wenn das Bremskraftniveau im geregelten Rad einen bestimmten Grenzwert überschreitet. Dadurch wird der Bremskraftabbau am geregelten Rad abhängig vom herrschenden Sperrmoment, so daß der Bremskraftabbau tatsächlich nur dann stattfindet, wenn eine wie oben geschilderte Betriebssituation droht.

### Zeichnung

Die Erfindung wird nachstehend anhand der in der Zeichnung dargestellten Ausführungsformen näher erläutert. Figur 1 zeigt eine Steuereinheit zur Steuerung des Antriebsschlupfes, während in Figur 2 ein bevorzugtes Ausführungsbeispiel der erfindungsgemäßen Lösung als Flußdiagramm dargestellt ist. Figur 3 zeigt Zeitdiagramme, die die Wirkungsweise dieser Lösung weiter verdeutlichen.

### Beschreibung von Ausführungsbeispielen

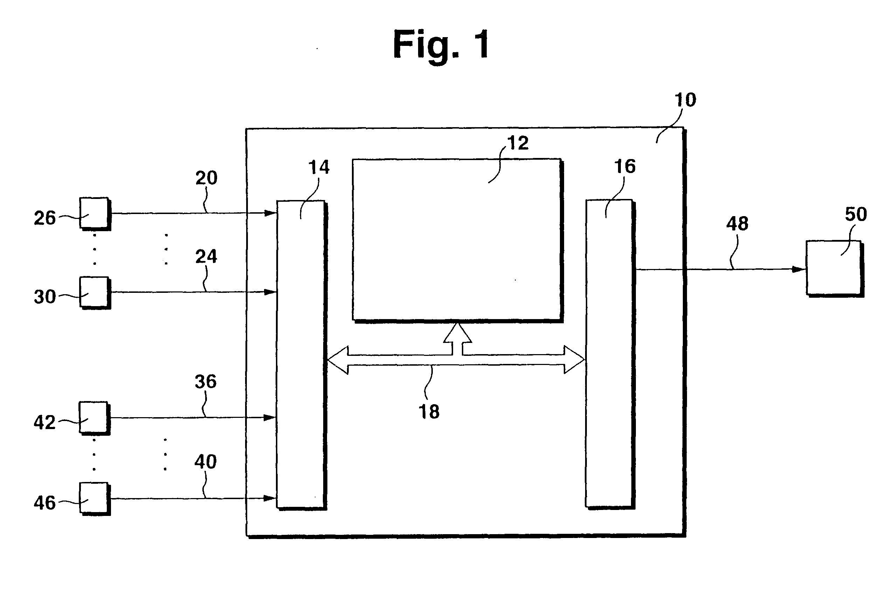

Figur 1 zeigt eine Steuereinheit 10, die im wesentlichen aus wenigstens einem Mikrocomputer 12, einer Eingangsschaltung 14, einer Ausgangsschaltung 16 und einem Kommunikationssystem 18 besteht, welches die vorstehend genannten Komponenten verbindet. Über Eingangsleitungen 20 bis 24 werden der Steuereinheit 10, dort der Eingangsschaltung 14 Signale von Meßeinrichtungen 26 bis 30 zugeführt, welche die Geschwindigkeiten der Räder des Fahrzeugs repräsentieren. Daneben sind Eingangsleitungen 36 bis 40 vorgesehen, welche von Meßeinrichtungen 42 bis 46 weitere Betriebsgrößen der Antriebseinheit und/oder des Fahrzeugs zuführen, die in Verbindung mit der Antriebsschlupfregelung benötigt werden. Beispiele für derartige Betriebsgrößen sind das von der Antriebseinheit abgegebene Drehmoment, im Ausführungsbeispiel einer Brennkraftmaschine der Drosselklappenwinkel, die Motordrehzahl, etc. Die Meßeinrichtungen stellen dabei Sensoren dar, die die bezeichneten Größen ermitteln oder in anderen Ausführungen Einrichtungen, die diese Größen aus einem oder mehreren Meßsignalen bestimmen. Die Meßeinrichtungen können dabei auch als Programme des Mikrocomputers 12 realisiert sein. Über die Ausgangsleitung 48 beeinflußt die Steuereinheit 10 die Bremsanlage 50 des Fahrzeugs, wobei in einem bevorzugten Ausführungsbeispiel einer hydraulischen Bremsanlage Ansteuerpulse zur Steuerung der einer Radbremse zugeordneten Ventilanordnungen zum Bremsdruckaufbau bzw. abbau ausgegeben werden.

Je nach Ausführungsbeispiel handelt es sich bei der Bremsanlage 50 um eine hydraulische, eine pneumatische oder eine elektromotorische Bremsanlage (Radbremse mit elektromotorischer Zuspannung) oder Kombinationen dieser Bremsanlagen. Daher wird im folgenden von Bremskraft an den Rädern gesprochen, was je nach Ausführung, den Bremsdruck, die Bremskraft zwischen Fahrbahn und Reifen, eine Bremskraft im Bereich der Radbremse, ein dort ausgeübtes Bremsmoment, eine eine solche Größe repräsentierende Stromgröße etc. bedeutet. Entsprechend werden je nach Ausführungsbeispiel neben den oben genannten Pulsen als Ansteuersignal pulsweitenmodulierte Signale ausgegeben, welche eine kontinuierliche Verstellung des Bremsenstellers erlauben (z.B. pulsweitenmodulierte Stromsignale zur Steuerung des die Zuspannung bewirkenden Elektromotors).

Wie zum Beispiel aus dem eingangs genannten Stand der Technik bekannt, wird bei Auftreten einer Durchdrehneigung an einem Antriebsrad Bremskraft an diesem Antriebsrad aufgebaut. Damit wird ein Sperrmoment erzeugt, welches die Traktion des Fahrzeugs und die Seitenführung des Fahrzeugs verbessert, da Antriebskraft über das andere, nicht gebremste Rad übertragbar ist. In besonderen Betriebssituationen, beispielsweise bei großen Reibwertunterschieden an den Antriebsrädern des Fahrzeugs, kann es vorkommen, daß während der Regelung an einem Rad, welches auf niedrigerem Reibwert läuft (Low-Rad), bei dort aufgebauter Bremskraft auch das andere Antriebsrad, welches auf höherem Reibwert läuft (High-Rad), durchdreht. Dieser sogenannte High-Rad-Abriß führt dazu, daß sowohl die Traktion als auch die Seitenführung beeinträchtigt wird. Um diese Betriebssituation zu vermeiden, wird erfindungsgemäß das Sperrmoment durch Bremskraftabbau am geregelten Rad reduziert, wenn das High-Rad kurz vor dem Abriß, d.h. kurz vor dem Durchdrehen auf hohem Reibwert, steht und vorzugsweise das aufgebaute Bremskraftniveau im geregelten Rad einen Grenzwert überschreitet. Der Bremskraftabbau findet solange statt, bis das High-Rad wieder stabil läuft.

Somit wird bei einseitiger Regelung, d.h. bei einer Regelung nur an einer Antriebsradseite, trotz positiver Regelabweichung ein Bremskraftabbau am Low-Rad durchgeführt und das Sperrmoment reduziert. In einem Ausführungsbeispiel wird dieser Bremskraftabbau bei Vorliegen eines speziellen Radverhaltens durchgeführt. Dieses Radverhalten besteht darin, daß die absolute Differenz zwischen der Radgeschwindigkeit des High-Rades und seiner Referenzgeschwindigkeit größer als eine bestimmte Schwelle ist, die allerdings kleiner ist als die Schwelle zur Erkennung eines unzulässigen Schlupfes an diesem Antriebsrad, oder wenn die absolute Differenz zwischen der Geschwindigkeit des High-Rades und seinem Referenzwert größer als eine zweite Schwelle ist und gleichzeitig die Radbeschleunigung des High-Rades größer als eine bestimmte Schwelle und die Radbeschleunigung des Low-Rads kleiner als eine bestimmte Schwelle ist. Diese Bedingungen stellen sicher, daß zuverlässig erkannt wird, daß das High-Rad kurz vor dem Abriß, d.h. kurz vor dem Durchdrehen auf hohem Reibwert, steht. Durch den präventiven Bremskraftabbau sofort nach Auftreten einer der oben genannten Bedingungen, wird erreicht, daß das High-Rad nicht abreißt und das Fahrzeug die Seitenführung nicht verliert. Damit wird auch frühzeitig ein Übergang zu einer empfindlicheren Antriebsschlupfregelung vermieden. Der Bremskraftabbau wird sofort bei Erfüllen einer der genannten Bedingungen durchgeführt. Der Gradient des Bremskraftabbaus ist einstellbar über die Haltezeit zwischen zwei Abbaupulsen bzw. bei einem pulsweitenmodulierten Signal durch Einstellen des Tastverhältnisses. Solange eine der oben genannten Bedingungen für den Bremskraftabbau erfüllt ist, wird das Sperrmoment reduziert und Bremskraft am Low-Rad reduziert. In einem vorteilhaften Ausführungsbeispiel findet der Abbau nur bei Überschreiten eines Bremskraftniveaus statt.

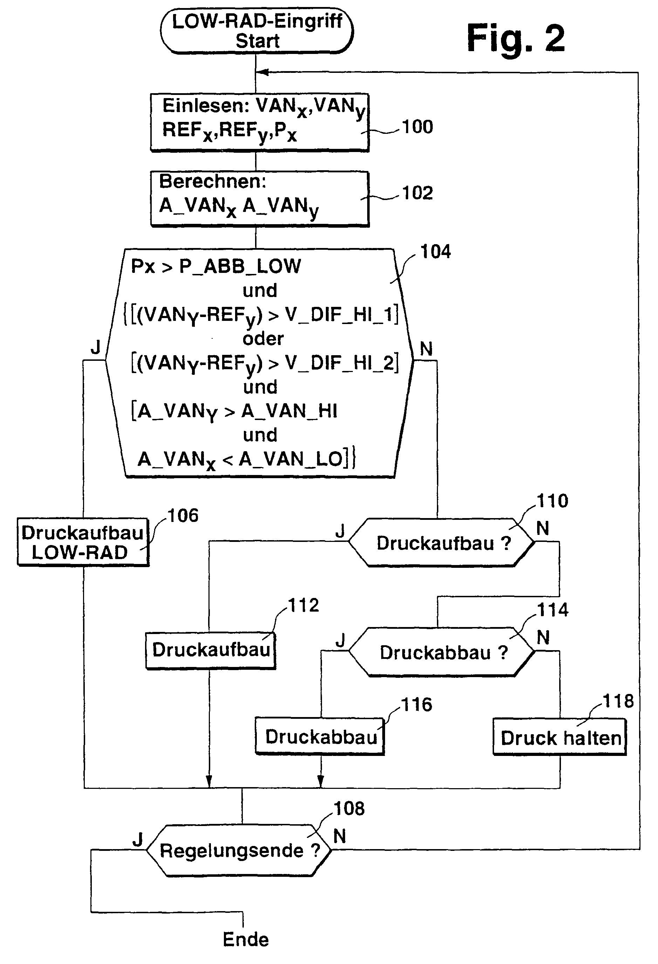

Ein bevorzugtes Ausführungsbeispiel ist anhand des Flußdiagramms nach Figur 2 dargestellt. Figur 2 zeigt dabei ein Flußdiagramm, welches die Realisierung der erfindungsgemäßen Lösung als Rechnerprogramm im Mikrocomputer 12 der Steuereinheit darstellt. Als bevorzugtes Ausführungsbeispiel wird dabei eine hydraulische Bremsanlage angenommen, so daß im Zusammenhang mit dem Ausführungsbeispiel nach Figur 2 von Bremsdrücken die Rede ist. Bei Anwendung an anderen Bremsanlagen bzw. bei Bremsanlagen, bei welchen die Bremskraft, das Bremsmoment etc. erfaßt wird, ist Bremsdruck durch den entsprechenden Begriff zu ersetzen.

Das in Figur 2 dargestellte Programm wird eingeleitet, wenn erstmalig ein Antriebsschlupfregeleingriff an einem Antriebsrad, welches im folgenden als Low-Rad definiert wird, infolge eines unzulässigen Schlupfes an diesem Rad eingeleitet wird. Im ersten Schritt 100 werden folgende Meßgrößen eingelesen, die Geschwindigkeit des Low-Antriebsrades VANX, die des High-Antriebsrades VANY, die Referenzgeschwindigkeit für das Low-Rad REFX, welche der Radgeschwindigkeit des nicht angetriebenen Rades auf der Seite dieses Rades entspricht, sowie entsprechend der Referenzgeschwindigkeit REFY auf der High-Rad-Seite. Ferner wird der im Low-Rad herrschende Bremsdruck PX eingelesen oder auf der Basis der Anzahl der ausgegebenen Ansteuerpulse geschätzt. Daraufhin wird im Schritt 102 jeweils auf der Basis wenigstens zweier Geschwindigkeitsmeßwerten die Radbeschleunigung am Low-Rad A_VANX und die Radbeschleunigung am High-Rad A_VANY bestimmt. Im darauffolgenden Schritt 104 werden die oben dargestellten Bedingungen überprüft. Es wird also überprüft, ob der Druck PX größer als eine Druckniveauschwelle P_ABB_LOW ist und ob die Differenz zwischen der Radgeschwindigkeit VANY und der Referenzgeschwindigkeit REFY auf der High-Rad-Seite größer als ein vorbestimmter Schwellenwert V_DIF_HI_1 ist, oder ob diese Differenz größer als ein vorbestimmter zweiter Schwellwert V_DIF_HI_2 ist und gleichzeitig die Radbeschleunigung am High-Rad A_VANY größer als ein vorgegebener Schwellwert A_VAN_HI und die Radbeschleunigung A_VANX am Low-Rad kleiner als ein entsprechender Grenzwert A_VAN_LO ist:
PX > P_ABB_LOW UND {(VANY - REFY) > V_DIF_HI_1
ODER [(VANY - REFY) > V_DIF_HI_2 UND A_VANY > A_VAN_HI
UND A_VANX < A_VAN_LO]}

Beispiele für diese Schwellenwerte sind für die Druckniveauschwelle 30 bar bei einem frontgetriebenen Fahrzeug, 80 bar bei einem heckgetriebenen Fahrzeug, die erste Geschwindigkeitsdifferenzschwelle 5 km/h, die zweite 2 km/h, die Radbeschleunigungsschwelle für das High-Rad 2 g, die für das Low-Rad -2 g.

Ist eine der Bedingungen erfüllt, wird im Schritt 106 der Druck im Low-Rad abgebaut. Daraufhin wird im Schritt 108 überprüft, ob die Regelung zu beenden ist, d.h. ob im geregelten Rad der Bremsdruck auf Null abgebaut ist und keine Durchdrehneigung mehr auftritt. Ist dies der Fall wird das Programm beendet, andernfalls mit Schritt 100 erneut durchlaufen. Ist eine der Bedingungen im Schritt 104 nicht erfüllt, wird im Rahmen der normalen Regelung im Schritt 110 überprüft, ob am geregelten Low-Rad Bremsdruck aufgebaut werden soll, d.h. ob beispielsweise der Radschlupf einen vorbestimmten Grenzwert überschreitet. Ist dies der Fall, wird gemäß Schritt 112 Druck aufgebaut, andernfalls im Schritt 114 gefragt, ob Bremsdruck abgebaut werden soll, d.h. wenn beispielsweise die Schlupfschwelle wieder unterschritten ist. Ist dies der Fall, wird Druck abgebaut (Schritt 116), andernfalls gemäß Schritt 118 der Druck gehalten. Nach den Schritten 112, 116 oder 118 folgt Schritt 108.

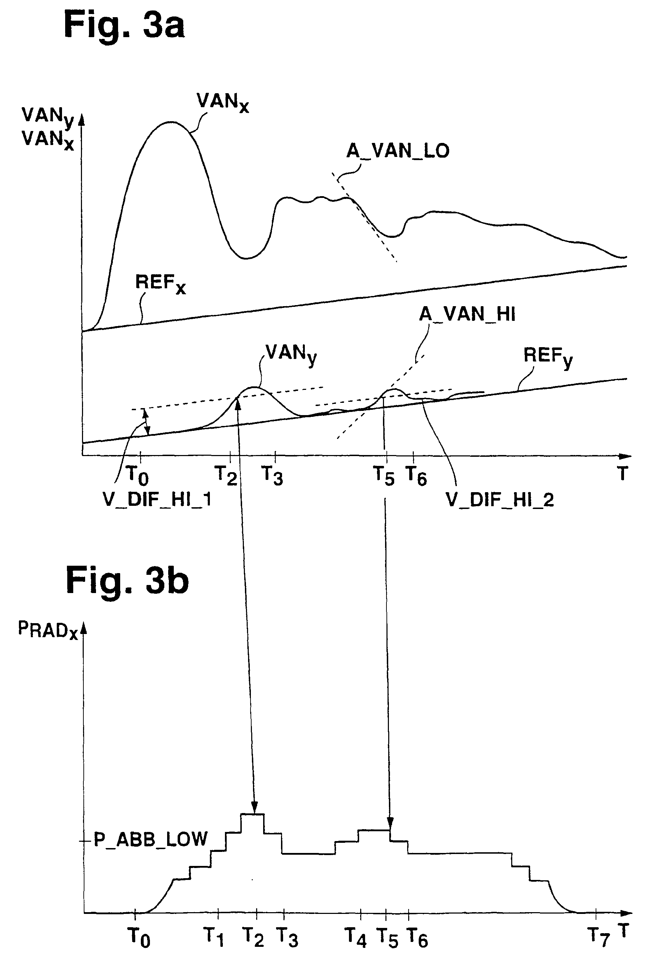

In Figur 3 sind Zeitdiagramme dargestellt, die die Wirkungsweise der anhand Figur 2 dargestellten Lösung näher verdeutlichen. Dabei sind in Figur 3a der zeitliche Verlauf der Radgeschwindigkeiten der Antriebsräder und ihrer Referenzgrößen aufgetragen, wobei X das Low-Rad, Y das High-Rad bedeutet. In Figur 3b ist der zeitliche Verlauf der Bremskraft im Low-Rad dargestellt. Zum Zeitpunkt T0 tritt am Low-Rad ein unzulässiger Antriebsschlupf auf, d.h. die Radgeschwindigkeit VANX übersteigt einen vorgegebenen Schlupfschwellenwert. Daher wird ab dem Zeitpunkt T0 zunächst kontinuierlich dann gepulst Bremskraft an diesem Rad aufgebaut (vgl. Figur 3b). Zum Zeitpunkt T1 überschreitet die Bremskraft den vorgegebenen Schwellenwert P_ABB_LOW, während zum Zeitpunkt T2 die Radgeschwindigkeit VANY des High-Rades die vorgegebene Schwelle V_DIF_HI_1 überschreitet (Figur 3a). Dies bedeutet, daß einer der genannten Bedingungen vorliegt, so daß ab dem Zeitpunkt T2 Druck abgebaut wird, obwohl am Low-Rad noch unzulässiger Schlupf herrscht (Figur 3b). Zum Zeitpunkt T3 unterschreitet die Radgeschwindigkeit VANY den vorgegebenen Grenzwert, so daß der Bremskraftabbau gestoppt wird. Ab dem Zeitpunkt T3 wird die Bremskraft dann wieder entsprechend dem Verhalten des Low-Rades geregelt, wobei zum Zeitpunkt T4 die Bremskraftniveauschwelle wieder überschritten wird. Zum Zeitpunkt T5 liegt die zweite Bedingung vor, d.h. die Radgeschwindigkeit VANY am High-Rad überschreitet die zweite Differenzenschwelle, seine Radbeschleunigung überschreitet ihren Grenzwert, während die Radbeschleunigung am Low-Rad ihren Grenzwert unterschreitet. Dies bedeutet, daß zum Zeitpunkt T5 erneut Bremskraft abgebaut wird, bis zum Zeitpunkt T6 diese Bedingung nicht mehr erfüllt ist. Danach wird die Bremskraft am Low-Rad wieder entsprechend dem Radverlauf am Low-Rad gesteuert, wobei zum Zeitpunkt T7 die Bremskraft vollständig abgebaut ist und die Regelung beendet wird.

## Patentansprüche

1. Verfahren zur Antriebsschlupfregelung, wobei bei Auftreten einer Durchdrehneigung an einem geregelten Rad dieses Rad gebremst wird, **dadurch gekennzeichnet, daß** die Bremskraft an dem geregelten Rad abgebaut wird, wenn an einem anderen, nicht geregelten Rad eine Durchdrehneigung zu erwarten ist.

2. Verfahren nach Anspruch 1, **dadurch gekennzeichnet, daß** der Bremskraftabbau dann stattfindet, wenn die Bremskraft am geregelten Rad einen vorbestimmten Schwellenwert überschreitet.

3. Verfahren nach einem der vorhergehenden Ansprüche, **dadurch gekennzeichnet, daß** der Bremskraftabbau dann stattfindet, wenn die Differenz zwischen der Radgeschwindigkeit des nicht geregelten Rades und seiner Referenzgeschwindigkeit einer vorbestimmten Schwellenwert überschritten wird, der kleiner ist, als der die Durchdrehneigung erkennenden Schwellenwert.

4. Verfahren nach einem der vorhergehenden Ansprüche, **dadurch gekennzeichnet, daß** der Bremskraftabbau dann stattfindet, wenn die Differenz zwischen der Radgeschwindigkeit des nicht geregelten Rades und seiner Referenzgeschwindigkeit eine vorbestimmte zweite Schwelle überschreitet und gleichzeitig die Radbeschleunigung dieses Rades einen Grenzwert über-, die Radbeschleunigung des geregelten Rades einen Grenzwert unterschreitet.

5. Verfahren nach einem der vorhergehenden Ansprüche, **dadurch gekennzeichnet, daß** der Gradient des Bremskraftabbaus einstellbar ist.

6. Verfahren nach einem der vorhergehenden Ansprüche, **dadurch gekennzeichnet, daß** der Bremskraftabbau solange durchgeführt wird, bis die Bedingungen für den Bremskraftabbau nicht mehr vorliegen.

7. Verfahren nach einem der vorhergehenden Ansprüche, **dadurch gekennzeichnet, daß** die Radbremse Teil einer hydraulischen, pneumatischen oder elektromotorischen Bremsanlage oder einer Kombination solcher Bremsanlagen ist.

8. Vorrichtung zur Antriebsschlupfregelung, mit einer Steuereinheit, welche bei Durchdrehneigung an einem geregelten Antriebsrad Ansteuersignale zur Bremsbetätigung an diesem Antriebsrad ausgibt, **dadurch gekennzeichnet, daß** die Steuereinheit Mittel aufweist, welche die Bremskraft an diesem geregelten Antriebsrad abbauen, wenn eine Durchdrehneigung an einem anderen, nicht geregelten Rad zu erwarten ist.

## Claims

1. Method for traction slip control, wherein upon the occurrence of a tendency of a controlled wheel to spin this wheel is braked, **characterized in that** the brake force at the controlled wheel is reduced when a tendency to spin is expected at another, non-controlled wheel.

2. Method according to Claim 1, **characterized in that** the brake force reduction takes place whenever the brake force at the controlled wheel exceeds a predetermined threshold value.

3. Method according to one of the preceding claims, **characterized in that** the brake force reduction takes place whenever the difference between the wheel speed of the non-controlled wheel and its reference speed exceeds a predetermined threshold value which is smaller than the threshold value detecting the tendency to spin.

4. Method according to one of the preceding claims, **characterized in that** the brake force reduction takes place whenever the difference between the wheel speed of the non-controlled wheel and its reference speed exceeds a predetermined second threshold and, at the same time, the wheel acceleration of the controlled wheel falls below a limit value.

5. Method according to one of the preceding claims, **characterized in that** the gradient of the brake force reduction can be set.

6. Method according to one of the preceding claims, **characterized in that** the brake force reduction is carried out until the conditions for the brake force reduction no longer obtain [?].

7. Method according to one of the preceding claims, **characterized in that** the wheel brake is part of a hydraulic, pneumatic or electric motor-driven brake system or a combination of such brake systems.

8. Device for traction slip control, having a control unit which, upon the occurrence of a tendency to spin at a controlled drive wheel, outputs trigger signals for brake actuation at this drive wheel, **characterized in that** the control unit has means which reduce the brake force at this controlled drive wheel when a tendency to spin is expected at another, non-controlled wheel.

## Revendications

1. Procédé de régulation antipatinage, selon lequel une roue régulée, sur laquelle apparaît une tendance au patinage, est freinée,
**caractérisé en ce que**
la force de freinage sur la roue régulée est réduite lorsqu'une tendance au patinage est escomptée sur une autre roue non régulée.

2. Procédé selon la revendication 1,
**caractérisé en ce que**
la réduction de la force de freinage se produit lorsque la force de freinage sur la roue régulée dépasse une valeur seuil prédéterminée.

3. Procédé selon l'une quelconque des revendications précédentes,
**caractérisé en ce que**
la réduction de la force de freinage se produit lorsque la différence entre la vitesse de la roue non régulée et sa vitesse de référence dépasse une valeur seuil prédéterminée inférieure à celle caractérisant la tendance au patinage.

4. Procédé selon l'une quelconque des revendications précédentes,
**caractérisé en ce que**
la réduction de la force de freinage se produit lorsque la différence entre la vitesse de la roue non régulée et sa vitesse de référence dépasse une deuxième valeur seuil prédéterminée et lorsque simultanément l'accélération de cette roue est supérieure ou inférieure à une valeur limite.

5. Procédé selon l'une quelconque des revendications précédentes,
**caractérisé en ce que**
le gradient de la réduction de la force de freinage est réglable.

6. Procédé selon l'une quelconque des revendications précédentes,
**caractérisé en ce que**
la réduction de la force de freinage est réalisée jusqu'à ce que les conditions de cette réduction ne soient plus réunies.

7. Procédé selon l'une quelconque des revendications précédentes,
**caractérisé en ce que**
le frein de la roue fait partie d'une installation de freinage hydraulique, pneumatique ou électromotorisée ou d'une combinaison de ces deux types d'installations.

8. Dispositif de régulation antipatinage doté d'une unité de commande qui, lorsqu'une tendance au patinage apparaît, émet des signaux de commande à une roue motrice régulée pour l'actionnement des freins sur cette même roue,
**caractérisé en ce que**
l'unité de commande présente des moyens qui réduisent la force de freinage sur cette roue motrice régulée lorsqu'une tendance au patinage est escomptée sur une autre roue non régulée.
